## Europäisches Patentamt
## European Patent Office
## Office européen des brevets

(11) Veröffentlichungsnummer : **0 227 850**
**B1**

(12) **EUROPÄISCHE PATENTSCHRIFT**

(45) Veröffentlichungstag der Patentschrift :
15.06.88

(51) Int. Cl.⁴ : **G 01 L 1/22**, G 01 G 3/14

(21) Anmeldenummer : 85116320.4

(22) Anmeldetag : 20.12.85

(54) Kraftaufnehmer.

(43) Veröffentlichungstag der Anmeldung :
08.07.87 Patentblatt 87/28

(45) Bekanntmachung des Hinweises auf die Patenterteilung : 15.06.88 Patentblatt 88/24

(84) Benannte Vertragsstaaten :
DE

(56) Entgegenhaltungen :
WO-A-83 /002 22
DE-B- 2 900 614
GB-A- 2 063 560
GB-A- 2 107 072
GB-A- 2 150 307
US-A- 4 065 962

(73) Patentinhaber : HOTTINGER BALDWIN MESSTECH-NIK GMBH
Im Tiefen See 45 Postfach 42 35
D-6100 Darmstadt (DE)

(72) Erfinder : Ort, Werner, Dr. rer. nat.
Mozartweg 42
D-6100 Darmstadt (DE)

(74) Vertreter : Brand, Fritz, Dipl.-Ing.
Hottinger Baldwin Messtechnik GmbH Patentabteilung Im Tiefen See 45 Postfach 42 35
D-6100 Darmstadt (DE)

EP 0 227 850 B1

## Beschreibung

Die Erfindung betrifft einen Kraftaufnehmer, insbesondere für den Einsatz in oberschaligen Waagen, mit einer als Doppelbiegebalken ausgebildeten, als Parallelführung und als Kraft-Dehnungswandler dienenden Meßfeder, mit je zwei auf dem oberen und auf dem unteren Balken angebrachten Dehnungsmeßstreifen und einer Verdrahtung, mittels derer die ober- und unterseitigen Dehnungsmeßstreifen zu einer Meßbrücke verschaltet und erforderlichenfalls abgeglichen wird.

Bei bekannten Kraftaufnehmern dieser Art (DE-AS 29 00 614) ist die aus einem Materialstück bestehende Meßfeder an ihrem einen Ende mit Durchgangsbohrungen für Befestigungsmittel, wie Schrauben, zur Herstellung einer ortsfesten Verbindung versehen. An ihrem anderen Ende greift die zu messende Kraft an. Die auf der oberen und der unteren Fläche der Meßfeder angeordneten Dehnungsmeßstreifen sind mittels einer nicht näher dargestellten Verdrahtung zu einer Meßbrücke geschaltet und an eine Spannungsversorgung sowie an eine Auswerteeinrichtung für die Meßsignale angeschlossen.

Die moderne Technik stellt an solche Kraftaufnehmer hohe Anforderungen bezüglich Meßqualität, geringem Platzbedarf und kostengünstiger Herstellung. Beispielsweise werden solche Kraftaufnehmer als sogenannte Wägezellen für oberschalige Waagen, insbesondere Handelswaagen verwendet. Hier besteht die Forderung nach kleiner Bauhöhe, wobei die Wägezelle bei exzentrischer Lage des Wiegegutes auf der Wägeplattform erhebliche Torsionsmomente aushalten muß, ohne daß sich dies nachteilig auf die Funktionen der Waage auswirken darf. Auch muß die Umwandlung der Kraft in Dehnung weitestgehend nachwirkungs- und hysteresefrei erfolgen. All dies erfordert die Verwendung hochwertiger und damit teurer Legierungen als Material für die Meßfeder.

Der Erfindung liegt die Aufgabe zugrunde, einen kostengünstig herzustellenden Kraftaufnehmer der genannten Gattung vorzuschlagen, der die erwähnten hohen Anforderungen erfüllt. Diese Aufgabe wird mit den im Patentanspruch 1 angegebenen Merkmalen gelöst. Bei einem derart gestalteten Kraftaufnehmer werden nur für die Funktionen Umwandlung der zu messenden Kraft in Materialverformungen und Parallelführung und Abstützung von Momenten hochwertige und daher teuere Legierungen verwendet und ist eine kostenintensive mechanische Bearbeitung auf ein Mindestmaß reduziert. Die bisher zur Befestigung an Einleitungsteilen für Kraft und Gegenkraft erforderlichen längeren Enden der Meßfeder entfallen und werden durch die rahmenartigen Verbindungselemente ersetzt, in die die kürzere Meßfeder eingesetzt ist. Für diese Verbindungselemente, die vorzugsweise als Gußteile zugleich mit den erforderlichen Aussparungen für Befestigungsmittel und Leiterdurchführung hergestellt

sind, kann weniger anspruchsvolles und damit preiswerteres Material verwendet werden. Eine aufwendige mechanische Bearbeitung entfällt; mechanische Zwängungen, die meßwertverfälschende Auswirkungen haben können, werden durch Verkleben der rahmenartigen Verbindungselemente mit der Meßfeder praktisch vermieden, da hierbei keine großen Flächenpressungen entstehen. Weitere Vorteile ergeben sich bei den in den Unteransprüchen angegebenen Ausgestaltungen, die in der nachfolgenden Beschreibung erörtert sind.

Es zeigen in schematischer Darstellung

Fig. 1 eine Meßfeder mit Dehnungsmeßstreifen und Verdrahtung,

Fig. 2 ein rahmenartiges Verbindungselement,

Fig. 3 eine Meßfeder, die mit ihren beiden Enden in je ein rahmenartiges Verbindungselement eingesetzt ist,

Fig. 4 eine mit ihren beiden Enden in je ein rahmenartiges Verbindungselement mit Lastbegrenzungsanschlag eingesetzte Meßfeder,

Fig. 5a und 5b in Seiten- und Vorderansicht eine andere Version einer mit ihren beiden Enden in je ein rahmenartiges Verbindungselement mit Lastbegrenzungsanschlag eingesetzten Meßfeder,

Fig. 6 eine Anordnung gemäß Fig. 3, bei der sich das eine Verbindungselement in ein sich über die Meßfeder erstreckendes Gehäuse fortsetzt,

Fig. 7 eine als flexible Printplatte ausgeführte Verdrahtung mit integrierten Abgleichswiderständen und

Fig. 8 eine Variante der Meßfeder gemäß Fig. 1.

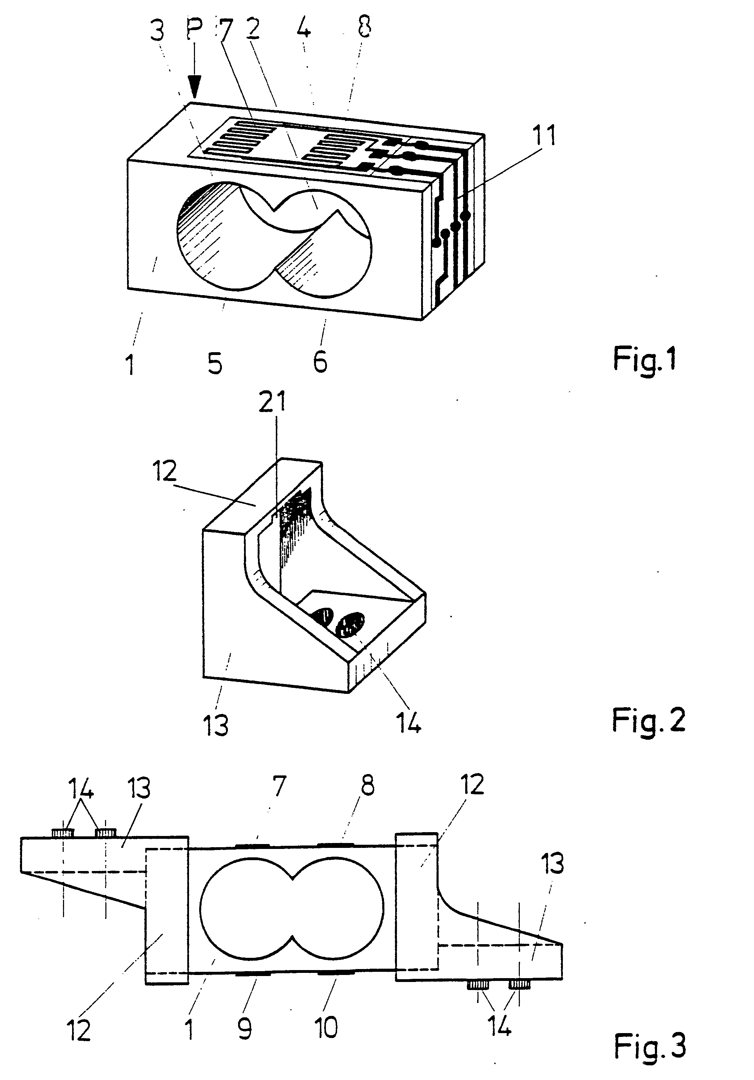

Bei der Meßfeder 1 gemäß Fig. 1 ist in bekannter Weise durch zwei ineinander übergehende Bohrungen eine Aussparung 2 geschaffen. Dadurch entstehen jeweils ober und unterhalb jeder Bohrung Zonen 3, 4, 5 und 6, in denen sich das Meßfedermaterial zufolge einer auf das eine Meßfederende in Pfeilrichtung wirkenden Kraft P bevorzugt verformt, wenn das andere Meßfederende ortsfest gehalten wird. Auf der oberen Meßfederfläche sind im Bereich der Zone 3 ein elektrischer Dehnungsmeßstreifen 7, im Bereich der Zone 4 ein elektrischer Dehnungsmeßstreifen 8 und analog auf der unteren Meßfederfläche — in Fig. 1 verdeckt — elektrische Dehnungsmeßstreifen 9 und 10 im Bereich der Zonen 5 bzw. 6 befestigt. Zufolge der Kraft P werden die die Dehnungsmeßstreifen 8 und 9 tragenden Flächen der Meßfeder 1 gedehnt und die die Dehnungsmeßstreifen 7 und 10 tragenden Flächen gestaucht. Dies bewirkt in den Dehnungsmeßstreifen 7 - 10 entsprechende Änderungen des elektrischen Widerstands. Die Dehnungsmeßstreifen 7 bis 10 sind mittels der Verdrahtung 11 zu einer Meßbrücke verschaltet, in der die Widerstandsänderungen der Dehnungsmeßstreifen und einer an der Brücke anliegenden Speise- bzw. Hilfs-Spannung in ein der Wirkung der Kraft P proportionales elektrisches Meßsignal umgewandelt werden.

Die Länge der Meßfeder ist auf ein Mindestmaß beschränkt, das allein zur Erfüllung der hohen meßtechnischen Qualitätsanforderungen erforderlich ist. Damit wird der Aufwand sowohl für hochwertiges, teures Federmaterial als auch für kostenintensive mechanische Bearbeitung auf das absolut Notwendige reduziert. An die Stelle der bisher üblichen längeren Enden der Meßfeder, an denen diese einerseits ortsfest befestigt andererseits mit Bauteilen zur Einleitung der zu messenden Kraft verbunden wird, treten rahmenartige Verbindungselemente, in die die kurzen Endstummel der Meßfeder eingesetzt, vorzugsweise eingeklebt werden. Für diese Verbindungselemente kann ein geeignetes Material verwendet werden, das wesentlich kostengünstiger als das Meßfedermaterial ist, weil hieran nicht wie an jenes hohe Ansprüche gestellt werden müssen. Besonders günstig ist es, die Verbindungselemente als Gußteile herzustellen — z. B. als Aluminiumspritzgußteile — wobei sich als weiterer kostensparender Vorteil ergibt, daß im Gießverfahren zugleich auch Befestigungsmittel und Aussparungen hergestellt und damit gesonderte Bearbeitungsvorgänge für diese Teile eingespart sowie Gehäuse und Überlastanschläge in die Befestigungsrahmen zusätzlich fast ohne Mehrkosten integriert werden können.

Verschiedene Ausführungsformen solcher Verbindungselemente ergeben sich aus den Figuren 2 bis 6. Allen gemeinsam ist ein Rahmen 12, in den die kurzen Endstummel der Meßfeder 1 eingesetzt sind, mit einem sich im wesentlichen parallel zu Längsachse der Meßfeder 1 erstreckenden Fortsatz 13 mit Befestigungsmitteln 14, z. B. Schraublöchern, zur Herstellung einer Verbindung mit den Bauteilen für die Einleitung der Kraft bzw. Gegenkraft.

Die Endstummel der Meßfeder 1 sind vorzugsweise in die Rahmen 12 eingeklebt. Auf diese Weise werden nennenswerte Flächenpressungen vermieden, die in der Nähe der Dehnungsmeßstreifen Fehlersignale hervorrufen könnten.

Bei den in den Figuren 3, 4 und 6 gezeigten Ausführungsbeispielen erstrecken sich die Fortsätze 13 der Verbindungselemente an den beiden Enden von der Meßfeder 1 weg nach außen. An dem Fortsatz 13 des einen (rechten) Verbindungselements wird die Meßfeder 1 über die dortigen Befestigungsmittel 14 ortsfest gehalten, am Fortsatz 13 des anderen (linken) Verbindungselements wird über die dortigen Befestigungselemente 14 eine Verbindung mit einem die zu messende Kraft einleitenden Bauteil hergestellt.

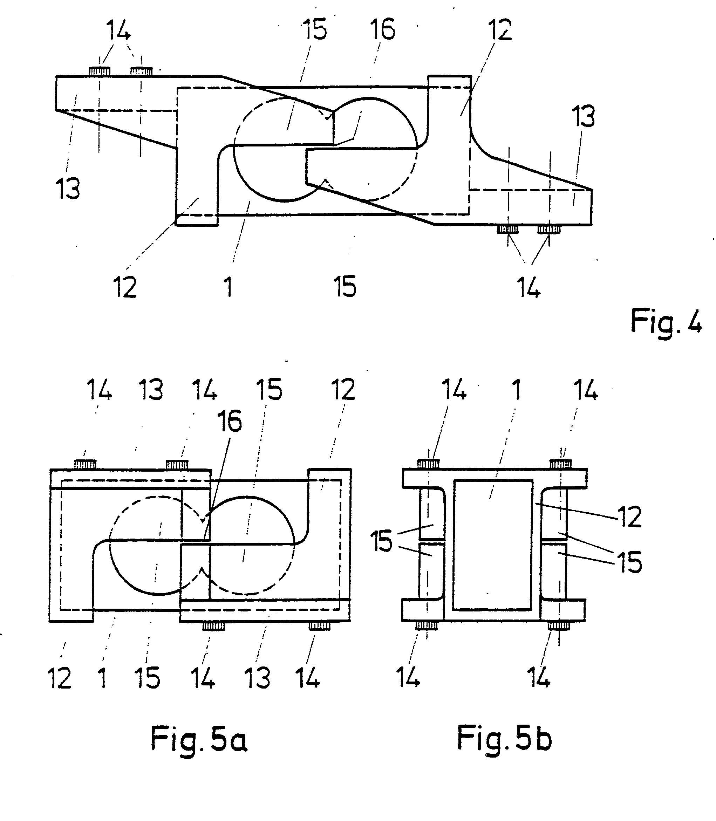

Die Fig. 5 zeigt eine Ausführungsform, bei der sich die Fortsätze 13 der Verbindungselemene nicht von der Meßfeder 1 nach außen sondern ober- bzw. unterhalb der Meßfeder 1 erstrecken. Hierdurch wird eine besonders kurze, kompakte Bauweise ermöglicht.

Bei den Ausgestaltungen gemäß den Figuren 4 und 5 besitzen die Verbindungselemente weitere Ansätze 15, die seitlich der Meßfeder 1 bis über die Meßfedermitte hinaus zurückgeführt sind und sich dort mit ihren freien Enden mit wählbarem Abstand 16 überlappen. Bei entsprechender Wahl des Abstandes 16 dienen diese Ansätze als Lastbegrenzungsanschläge. Es ist zweckmäßig, derartige Ansätze symmetrisch zu beiden Seiten der Meßfeder 1 vorzusehen.

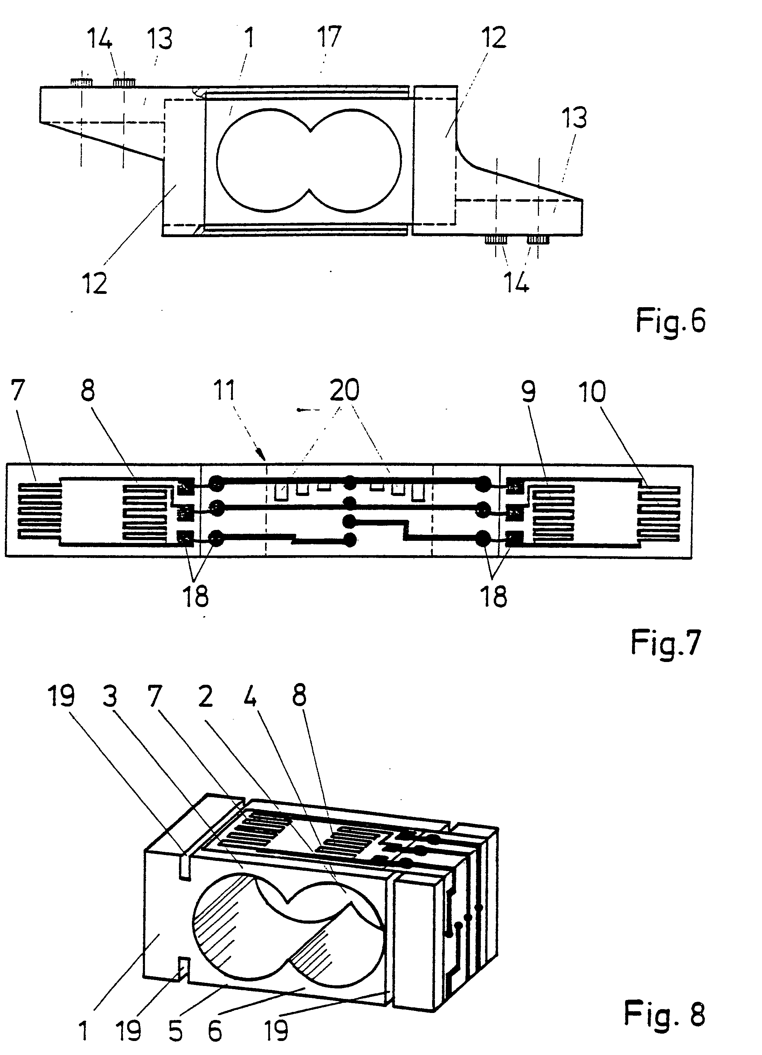

Die Dehnungsmeßstreifen 7 bis 10 sind, wie in Fig. 7 dargestellt, mittels der Verdrahtung 11 zu einer elektrischen Meßbrücke geschaltet. Es ist zweckmäßig, eventuell für elektrische Abgleichsmaßnahmen erforderliche Schaltungselemente, wie beispielsweise die in Fig. 7 vorgesehenen Abgleichswiderstände 20 für einen Nullpunktsabgleich, in die Verdrahtung 11 zu integrieren.

Die Verdrahtung 11 ist als flexible Printplatte oder Flachbandkabel ausgebildet und am einen Ende der Meßfeder von deren oberen Fläche um ihre Stirnseite herum zur unteren Meßfederfläche geführt, wie aus Fig. 1 ersichtlich, bevor dieses Meßfederende in den Rahmen 12 eines Verbindungselementes eingesetzt wird. Für externe Anschlüsse an die Verdrahtung können bei Bedarf im Verbindungselement 12, 13 entsprechende Ausnehmungen 21 vorgesehen werden. Die Anschlußpunkte 18 der integrierten Schaltungselemente 20 und der Printplatte werden im gleichen Rastermaß einander gegenüberliegend angeordnet.

Gemäß der in Fig. 6 dargestellten Ausgestaltung erstreckt sich von mindestens einem Verbindungselement aus ein hülsenartiges Gehäuse 17 als Schutz über die Meßfeder 1. Zweckmäßigerweise wird dieses Gehäuse 17 zusammen mit dem Verbindungselement als einstückiges Gußteil hergestellt. Es kann weiterhin zweckmäßig sein, die Verbindungselemente auch zusammen mit den Bauteilen zur Einleitung der Kraft und/oder Gegenkraft als einstückige Gußteile herzustellen.

In Fällen, wo die Verdrahtung, die Anschlüsse oder Teile derselben in eine Vergußmasse eingeschlossen werden müssen, z. B. zum Schutz gegen Feuchtigkeit, wird vorteilhafterweise das Verbindungselement am verdrahtungsseitigen Ende der Meßfeder zugleich als Gußform für die Vergußmasse ausgebildet und verwendet.

Für den Fall, daß sich aus der Verbindung der Meßfeder 1 mit dem rahmenartigen Verbindungselement 12 ausnahmsweise Rückwirkungen auf die Dehnungsmeßstreifen 7 - 10 ergeben, die noch ausgeschlossen werden müssen, können die in die Verbindungselemente 12 eingesetzten kurzen Endstummel der Meßfeder 1, wie aus Fig. 8 ersichtlich, durch Schlitze 19 im Meßfedernmaterial von der die Dehnungsmeßstreifen 7 - 10 tragenden Meßstrecke entkoppelt werden.

**Patentansprüche**

1. Kraftaufnehmer, insbesondere für den Einsatz in oberschaligen Waagen, mit einer als Doppelbiegebalken ausgebildeten, als Parallelführung und als Kraft-Dehnungswandler dienenden Meßfeder (1), mit je zwei auf dem oberen und auf dem unteren Balken angebrachten Dehnungsmeßstreifen (7, 8, 9, 10) und einer Verdrahtung (11), mittels derer die oberund unterseitigen Dehnungsmeßstreifen zu einer Meßbrücke verschaltet werden, dadurch gekennzeichnet, daß die Meßfeder (1) an ihrem verdrahtungsseitigen Ende in ein rahmenartiges Verbindungselement (12, 13) zur Herstellung einer Verbindung mit dem Bauteil für die Einleitung der Kraft bzw. Gegenkraft eingesetzt, vorzugsweise eingeklebt, ist und die Verdrahtung (11) als, vorzugsweise rechteckige, flexible Printplatte ausgeführt und am einen Ende der Meßfeder (1) unter dem dortigen Verbindungselement (12, 13) hindurchgeführt ist.

2. Kraftaufnehmer nach Anspruch 1, dadurch gekennzeichnet, daß die Meßfeder (1) auch an ihrem dem verdrahtungsseitigen Ende entgegengesetzten Ende in ein rahmenartiges Verbindungselement (12, 13) eingesetzt ist.

3. Kraftaufnehmer nach Anspruch 1 oder 2, dadurch gekennzeichnet, daß die Verbindungselemente (12, 13) schuhförmig ausgebildet und jeweils mit einem sich im wesentlichen parallel zur Längsachse der Meßfeder erstreckenden Fortsatz (13) mit Befestigungsmitteln (14) zum Befestigen des Kraftaufnehmers an den Bauteilen zur Einleitung der Kraft bzw. Gegenkraft versehen sind.

4. Kraftaufnehmer nach Anspruch 3, dadurch gekennzeichnet, daß sich die Fortsätze (13) jeweils von der Meßfeder weg nach außen erstrecken.

5. Kraftaufnehmer nach Anspruch 3, dadurch gekennzeichnet, daß sich die Fortsätze (13) ober- bzw. unterhalb der Meßfeder (1) erstrecken.

6. Kraftaufnehmer nach einem der Ansprüche 2 bis 5, dadurch gekennzeichnet, daß die Verbindungselemente (12, 13) mit Ansätzen (15) versehen sind, die seitlich — vorzugsweise zu beiden Seiten — der Meßfeder (1) bis über die Mitte der Meßfeder zurückgeführt sind und mit ihren freien Enden mit wählbarem Abstand (16) übereinanderliegen und als Lastbegrenzungsanschläge dienen.

7. Kraftaufnehmer nach einem der vorhergehenden Ansprüche, dadurch gekennzeichnet, daß das Verbindungselement (12, 13) am verdrahtungsseitigen Ende der Meßfeder (1) zugleich als Gußform zum Herstellen eines die Verdrahtung schützenden Vergusses dient.

8. Kraftaufnehmer nach Anspruch 7, dadurch gekennzeichnet, daß das Verbindungselement (12, 13) im Bereich der Anschlüsse eines Kabels an die Verdrahtung (11) eine Ausnehmung (21) besitzt.

9. Kraftaufnehmer nach einem der vorhergehenden Ansprüche, dadurch gekennzeichnet, daß die Verbindungselemente (12, 13) mit den Bauteilen zur Einleitung der Kraft bzw. Gegenkraft jeweils aus einem Stück bestehen.

10. Kraftaufnehmer nach einem der vorhergehenden Ansprüche, dadurch gekennzeichnet, daß die Verbindungselemente (12, 13) als Aluminium-Spritzgußteile ausgeführt sind.

11. Kraftaufnehmer nach einem der vorhergehenden Ansprüche, dadurch gekennzeichnet, daß sich zumindest von einem der Verbindungselemente (12, 13) aus ein die Meßfeder (1) umhüllendes Gehäuse (17) erstreckt, das vorzugsweise mit dem betreffenden Verbindungselement (12, 13) aus einem Stück besteht.

12. Kraftaufnehmer nach Anspruch 1 oder 2, dadurch gekennzeichnet, daß in die Verdrahtung (11) Schaltungselemente (20) für den elektrischen Abgleich integriert sind.

13. Kraftaufnehmer nach Anspruch 1 oder 2 und 12, dadurch gekennzeichnet, daß die Anschlußpunkte (18) der integrierten Schaltungselemente (20) und der Printplatte (11) im gleichen Rastermaß einander gegenüberliegend angeordnet sind.

14. Kraftaufnehmer nach einem der vorhergehenden Ansprüche, dadurch gekennzeichnet, daß in der Meßfeder (1) jeweils zwischen dem von einem rahmenartigen Verbindungselement (12) umfaßten Meßfederende und dem die Dehnungsmeßstreifen (7 - 10) tragenden Meßfederteil quer zur Längserstreckung der Meßfeder verlaufende Schlitze (19) angebracht sind.

## Claims

1. A force receiver, particularly for the insertion in top-scale balances, with a measuring spring (1) which is constructed as a double beam, serving as both a parallel construction and as a stress/strain transducer, with wire strain gauges (7, 8, 9, 10) mounted, two on the upper and two on the lower beams, and wiring (11) by means of which the upper-side and lower-side wire strain gauges are connected to a measuring or resistance bridge, characterized in that the measuring spring (1) is inserted, preferably glued, at its wired end in a frame-like connecting element (12, 13) for producing a linkage to the component for the input of the force or counter-force, and the wiring (11) is constructed as a, preferably rectangular, flexible printed circuit and at one end of the measuring spring (1) is passed through under the connecting element (12, 13) there.

2. A force receiver according to claim 1, characterized in that the measuring spring (1) is inserted also at the end opposite the wired end into a frame-like connecting element (12, 13).

3. A force receiver according to claim 1 or 2, characterized in that the connecting elements (12, 13) are made shoe-like and in each case are provided with a projection (13) with fastening means (14) for fastening the force receiver on the components for the input of the force or counter-force, which projection extends in each case substantially parallel to the longitudinal axis of the measuring spring.

4. A force receiver according to claim 3, characterized in that the extensions (13) in each case extend away from the measuring spring outwardly.

5. A force receiver according to claim 3, characterized in that the extensions (13) extend over or underneath the measuring spring (1).

6. A force receiver according to one of claims 2 to 5, characterized in that the connecting elements (12, 13) are provided with projections (15) which are led back laterally — preferably on both sides — of the measuring spring (1) as far as over the centre of the measuring spring and lie one over the other with their free ends with a spacing which can be chosen and serve as forcelimiting stops.

7. A force receiver according to one of the preceding claims, characterized in that the connecting element (12, 13) on the wiring-side end of the measuring spring (1) serves at the same time as mould for producing a casting protecting the wiring.

8. A force receiver according to claim 7, characterized in that the connecting element (12, 13) has a recess (21) in the region of the connection of a cable at the wiring (11).

9. A force receiver according to one of the preceding claims, characterized in that the connecting elements (12, 13) are integral in each case with the component for the input of the force or counter-force.

10. A force receiver according to one of the preceding claims, characterized in that the connecting elements (12, 13) are made as aluminium injection mouldings.

11. A force receiver according to one of the preceding claims, characterized in that at least from one of the connecting elements (12, 13) extends a housing (17) enclosing the measuring spring (1), which housing preferably is integral with the respective connecting element (12, 13).

12. A force receiver according to claim 1 or 2, characterized in that circuit elements (20) for the electrical balance are integrated into the wiring (11).

13. A force receiver according to claim 1 or 2 and 12, characterized in that the connection points (18) of the integrated circuit elements and of the printed circuit boards are arranged in the same layout opposite each other.

14. A force receiver according to one of the preceding claims, characterized in that slots (19) are made in the measuring spring (1) in each case, between the measuring spring ends enveloped by a frame-like connecting element (12) and the measuring spring part carrying the wire strain gauges (7-10), said slots extending transversely to the longitudinal direction of the measuring spring.

## Revendications

1. Jauge de contrainte, en particulier pour l'utilisation sur des balances à plateau supérieur avec un ressort de mesure (1) sous forme d'une poutre à double flexion, comme guidage parallèle et servant de transformateur flexion-contrainte avec chacun des bandes de mesure de flexion (7, 8, 9, 10) rapportées sur les parties supérieure et inférieure de la poutre et un câblage (11) au moyen duquel les bandes de mesure de flexion supérieure et inférieure sont connectées à un pont de mesure, caractérisée en ce que le ressort de mesure (1) est introduit à son extrémité côté câblage dans un élément de liaison en forme de cadre (12, 13) pour l'obtention d'une liaison avec le châssis pour la transmission de la contrainte ou de la contrecontrainte, et avantageusement collé et le câblage (11) avantageusement à angle droit constitue une plaquette de circuit imprimé flexible et est introduit à une extrémité de la jauge de contrainte (1) à la partie inférieure de l'élément de liaison (12, 13) se trouvant là.

2. Jauge de contrainte selon la revendication 1, caractérisée en ce que le ressort de mesure (1) est introduit aussi à son extrémité opposée à son extrémité côté câblage dans un élément de liaison en forme de cadre (12, 13).

3. Jauge de contrainte selon la revendication 1 ou 2, caractérisée en ce que les éléments de liaison, (12, 13) sont en forme de sabot et sont munis chacun d'une protubérance (13) faisant saillie pratiquement parallèlement à l'axe longitudinal de la jauge de contrainte avec des moyens de fixation (14) pour la fixation du ressort de mesure sur le bâti pour la transmission de la contrainte et de la contrecontrainte.

4. Jauge de contrainte selon la revendication 3, caractérisée en ce que les protubérances (13) s'étendent chacune depuis le ressort de mesure vers l'extérieur.

5. Jauge de contrainte selon la revendication 3, caractérisée en ce que les protubérances (13) s'étendent à la partie supérieure et à la partie inférieure du ressort (1).

6. Jauge de contrainte selon l'une des revendications 2 à 5, caractérisée en ce que les éléments de liaison (12, 13) sont munis de taquets (15) qui latéralement par rapport au ressort - avantageusement des deux côtés - sont ramenés au milieu de cette dernière et servent de butées de limitation de charge par leur extrémité libre avec un intervalle réglable (16).

7. Jauge de contrainte selon l'une des revendications précédentes, caractérisée en ce que l'élément de liaison (12, 13) à l'extrémité côté câblage du ressort de mesure (1) sert également de moule de coulée pour l'obtention d'un revêtement coulé protégeant le câblage.

8. Jauge de contrainte selon la revendication 7, caractérisée en ce que l'élément de liaison (12, 13) possède une cavité (21) dans la zone de jonction d'un câble sur le câblage (11).

9. Jauge de contrainte selon l'une des revendications précédentes, caractérisée en ce que les éléments de liaison (12, 13) sont constitués d'éléments de structure pour la transmission de la contrainte ou de la contrecontrainte chacun à partir d'une pièce.

10. Jauge de contrainte selon l'une des revendications précédentes, caractérisée en ce que les éléments de liaison (12, 13) sont réalisés sous forme de pièces en aluminium coulées par pulvérisation.

11. Jauge de contrainte selon l'une des revendications précédentes, caractérisée en ce qu'un boîtier (17) entourant le ressort (1) s'étend au moins à partir d'un des éléments de liaison (12, 13), ce boîtier formant avantageusement une pièce avec l'élément de liaison (12, 13) concerné.

12. Jauge de contrainte selon l'une des revendications 1 ou 2, caractérisée en ce que dans le câblage (11) sont intégrés des éléments de connexion (20) pour l'équilibrage électrique.

13. Jauge de contrainte selon l'une des revendications 1, 2 ou 12, caractérisée en ce que les points de connexion (18) de l'élément de connexion (20) et la plaquette de circuit imprimé (11) sont placés les uns en face des autres dans le même module.

14. Jauge de contrainte selon l'une des revendications précédentes, caractérisée en ce que dans la jauge de contrainte (1), entre l'extrémité comprise à partir d'un élément de liaison (12) en forme de cadre et les parties du ressort portant les bandes de mesure de flexion (7-10) sont placées des fentes (19) courant perpendiculairement au prolongement longitudinal du ressort.

0 227 850

Fig.1

Fig.2

Fig.3

Fig. 4

Fig. 5a

Fig. 5b

2

Fig. 6

Fig. 7

Fig. 8

3